(19) Europäisches Patentamt / European Patent Office / Office européen des brevets

(11) **EP 1 756 423 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(21) Anmeldenummer: **05715331.4**

(22) Anmeldetag: **15.02.2005**

(51) Int Cl.:
*F03D 11/02* (2006.01)  *F16H 47/10* (2006.01)
*F03B 11/00* (2006.01)  *F03D 9/00* (2006.01)
*F16H 61/64* (2006.01)  *F16H 61/52* (2006.01)

(86) Internationale Anmeldenummer:
**PCT/EP2005/001484**

(87) Internationale Veröffentlichungsnummer:
**WO 2005/121550 (22.12.2005 Gazette 2005/51)**

(54) **Energieerzeugungsanlage mit einem drehzahlgeregeltes Getriebe**

Energy generation installation with an adjustable-speed gear

Installation de production d'energie avec une transmission a vitesse reglable

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **12.06.2004 DE 102004028619**

(43) Veröffentlichungstag der Anmeldung:
**28.02.2007 Patentblatt 2007/09**

(73) Patentinhaber: **Voith Turbo GmbH & Co. KG**
**89522 Heidenheim (DE)**

(72) Erfinder:
• **TILSCHER, Martin**
**89522 Heidenheim (DE)**
• **BASTECK, Andreas**
**79540 Lörrach (DE)**

(74) Vertreter: **Dr. Weitzel & Partner**
**Patent- und Rechtsanwälte mbB**
**Friedenstrasse 10**
**89522 Heidenheim (DE)**

(56) Entgegenhaltungen:
WO-A-81/01444    WO-A-2004/088132
DE-A1- 1 600 228    GB-A- 504 390
US-A- 4 774 855    US-A- 4 964 843

• VOITH TURBO: "Vorecon Variable speed planetary gear" VOITH TURBO, Nr. Cr168e, April 2003 (2003-04), XP002332948
• H. HÖLLER: "Multi-Stage Variable Speed Drive - a hydrodynamic planetary gear unit with high efficiency" VOITH, Nr. Cr561e, März 1993 (1993-03), XP002332949 GERMANY
• VOITH TURBO: "Windrive" VOITH, Nr. Cr356en, April 2005 (2005-04), XP002332950

## Beschreibung

Die Erfindung betrifft eine Energieerzeugungslange mit einem drehzahlgeregelten, wie bekannt aus WO 81/01444, insbesondere eine solche, die von einer Strömungskraftmaschine, wie einer Wind- oder Wasserkraftmaschine, angetrieben wird und mittels eines elektrischen Generators elektrische Energie erzeugt.

Energieerzeugungsanlagen, die mit Hilfe eines Leistungsaufnehmers kinetische Energie einer Luft- oder Wasserströmung entnehmen, weisen aus zwei Gründen Besonderheiten auf. Zum einen schwankt die maximal zur Verfügung stehende kinetische Energie des Strömungsmediums im zeitlichen Verlauf, zum anderen weist die Leistungskonvertierung der kinetischen Energie der Strömung in die kinetische Energie des Leistungsaufnehmers, z. B. eines Windrotors oder einer Wasserturbine, eine inhärente Charakteristik auf, die jeder Strömungsgeschwindigkeit eine optimale Drehzahl des Leistungsaufnehmers zugeordnet, bei der eine maximale Leistungskonvertierung stattfindet. Die zugeordneten Strömungsgeschwindigkeiten und optimalen Drehzahlen sind wiederum von den Dimensionen und der geometrischen Gestaltung des Leistungsaufnehmers abhängig. Hieraus folgt, dass eine Energieerzeugungsanlage, wie eine Energie- oder Wasserkraftanlage, vorzugsweise mit einer variablen Eingangsdrehzahl zu betreiben ist, die wiederum möglichst optimal der jeweils anliegenden Strömungsgeschwindigkeit des Arbeitsmediums anzupassen ist.

Eine weitere Anforderung, an eine voranstehend beschriebene Energieerzeugungsanlage ergibt sich aus dem Umstand, dass der elektrische Generator auf ein Verbundnetz aufgeschaltet ist, das typischerweise mit einer konstanten Netzfrequenz arbeitet. Da es sich bei der konstanten Netzfrequenz um die primäre Regelungsgröße zur Stabilisierung eines Verbundsnetzes handelt, muss die von der Energieerzeugungsanlage in das Netz eingespeiste Energie frequenz- und phasenkonform eingespeist werden. Zum einen lässt sich dies durch Frequenzumrichter erreichen, die es erlauben, einen Generator mit einer jeweils erforderlichen Frequenz anzuregen bzw. die Differenz zur Netzfrequenz zu kompensieren und so einen drehzahlvariablen Generator zu verwirklichen. Die Schwierigkeit bei diesem Ansatz besteht für Energieerzeugungsanlagen, die durch die kinetische Energie eines Strömungsmedium angetrieben werden, darin, dass sich die Leistungsaufnahmecharakteristik eines Windrotors oder Wasserturbine nur bedingt durch einen Frequenzumrichter nachbilden lassen und aufgrund der Steifigkeit der definierten Generatorkennlinie durch den Frequenzumrichter komplexe Anforderungen an die Regelung bzw. Steuerung gestellt werden. So sind die bekannten Realisierungen, bei denen Frequenzumrichter zur Ankopplung einer gattungsgemäßen Energieerzeugungsanlage an ein Verbundnetz realisiert wurden, deshalb nicht optimal, da Oberschwingungsbelastungen auf dem Netz und die Erzeugung von signifikanten Blindleistungen unvermeidbar sind. In der vorliegenden Anmeldung wird deshalb ein gegenteiliger Weg beschrieben und für eine gattungsgemäße Energieerzeugungsanlage ein drehzahlgeregeltes Getriebe vorgeschlagen, dessen Ausgangswelle im Wesentlichen mit konstanter Drehzahl umläuft und gleichzeitig eine drehzahlvariabel und entlang einer optimalen Solldrehzahl geführte Eingangsdrehzahl verwirklicht werden kann. Hierdurch ist es sowohl möglich, einen drehzahlkonstanten elektrischen Generator anzutreiben, wie auch eine optimale Leistungsaufnahme aus dem Strömungsmedium im Teillastbereich zu realisieren.

Für ein Getriebe, das diese Aufgabe erfüllt, sind folgende Lösungsansätze bekannt geworden:

In einem ersten System wird die durch den Leistungsaufnehmer aus dem Strömungsmedium aufgenommene kinetische Leistung auf ein Überlagerungsgetriebe übertragen. Im Überlagerungsgetriebe wird eine Leistungsaufteilung auf einen elektrischen Generator sowie auf einen kleinen Stellmotor realisiert, wobei üblicherweise auf den Stellmotor in etwa ein Drittel der Eingangsleistung übertragen wird. Dadurch dass der Stellmotor mit unterschiedlichen Frequenzen entweder als Motor oder als Generator betrieben wird, kann die Generatordrehzahl stabilisiert und somit der Generator frequenzstarr betrieben und direkt mit dem Stromnetz verbunden werden. Der Stellmotor wiederum wird über einen Frequenzumrichter ans Netz angeschlossen oder alternativ durch einen mechanisch an den Generator gekoppelten Hilfsmotor gespeist. Das beschriebene System ist jedoch regelungstechnisch anspruchsvoll und in seiner Effizienz begrenzt. Beim Einsatz von Frequenzumrichtern treten darüber hinaus die voranstehend dargelegten Probleme auf.

In einem zweiten System, welches hydrostatisch arbeitet, wird der elektrische Stellmotor durch hydraulische Pumpen und Motoren ersetzt. Auch hier tritt die Problematik einer schwierigen Regelungscharakteristik auf, hinzu kommen, bedingt durch die hydraulischen Komponenten, ein träges Ansprechverhalten sowie relevante Totzeiten und starke Nichtlinearitäten.

Bei Energieerzeugungsanlagen wie Wind- und Wasserkraftanlagen treten zu der voranstehend beschriebenen grundsätzlichen Problematik beim Antrieb eines elektrischen Generators, der an ein Verbundnetz gekoppelt ist, noch weitere Anforderungen auf. Diese ergeben sich aus den speziellen Betriebszuständen, wie etwa dem Anfahr- bzw. Anhaltevorgang, einem Lastabwurf aufgrund einer gravierenden Netzinstabilität oder einer Drehzahlabregelung auf der Eingangswelle unter Volllastbedingungen. Die letztgenannte Anforderung ergibt sich insbesondere bei Windkraftanlagen, deren Rotorblattspitzen eine bestimmte Geschwindigkeit nicht überschreiten sollen, um die Geräuschentwicklung unterhalb eines bestimmten Schwellwertes zu halten. Der jeweilige Schwellwert kann dann wiederum in Abhängigkeit des Standorts der Windkraftanlage, etwa einem Onshore- oder einem Offshore-Standort, variieren. Hierbei sollte auch bei einer drehzahlabgeregelten Windkraftanlage eine gewisse Weichheit in der Reaktivität erhalten bleiben, d.h. beim Auftreten einer Windböe sollte auch eine drehzahlabgeregelte Windkraftanlage für kurze Zeit eine Zunahme der Rotordrehzahl ermöglichen, die dann wieder unmittelbar auf den Schwellwert zurückgeführt wird. Genügt ein Getriebe einer solchen Anforderung, so können auftretende Kraftstöße reduziert werden. Vorzuziehen ist es, wenn die in einer Böe zur Verfügung stehende zusätzliche Energie von der Energieerzeugungsanlage aufgenommen und in Form einer höheren Leistungsabgabe verwertet werden kann.

Der Erfindung liegt die Aufgabe zugrunde, eine Energieerzeugungsanlage anzugeben, welche ein Getriebe aufweist, das die voranstehenden Anforderungen erfüllt. Insbesondere sollte das Getriebe eine im Wesentlichen konstante Ausgangsdrehzahl zum Antrieb eines direkt einem Verbundnetz aufgeschalteten elektrischen Generators erzeugen. Hierbei sollte die Eingangswelle drehzahlvariabel der optimalen Leistungsaufnahmecharakteristik für den Leistungsaufnehmer, etwa einem Windrotor oder einer Wasserturbine, folgen. Ferner sollte auch die Eingangsdrehzahl beim Auftreten bestimmter Betriebszustände führbar bzw. oberhalb eines vorgegebenen Schwellwerts abregelbar sein. Solche Betriebszustände sind neben der Drehzahlabregelung beispielsweise das Start- und Stopphasen oder ein Lastabwurf. Darüber hinaus ist ein solches Getriebe für eine Energieerzeugungsanlage anzugeben, der eine gute Regelungscharakteristik sowie eine gewisse Weichheit in der Reaktivität aufweist und sich durch konstruktive und fertigungstechnische Einfachheit auszeichnet.

Zur Lösung dieser Aufgabe haben die Erfinder erkannt, dass der Leistungsfluss im Getriebe auf wenigstens zwei Leistungszweige mit mindestens zwei hydraulischen Kreisläufen aufgeteilt werden muss. Hierzu umfasst das Getriebe ein Überlagerungsgetriebe, welches wenigstens mittelbar in Wirkverbindung zur Eingangswelle steht und den Leistungsfluss auf einen ersten und einen zweiten Leistungszweig aufteilt. Der erste Leistungszweig ist wenigstens mittelbar mit der Ausgangswelle, die den elektrischen Generator antreibt, verbunden. Die geforderte Frequenzkonstanz der Ausgangswelle wird durch die Regelung bzw. die Steuerung des Leistungsflusses im zweiten Leistungszweig erreicht.

Erfindungsgemäß umfasst der zweite Leistungszweig wenigstens zwei hydrodynamische Kreisläufe, wobei mindestens einer der hydrodynamischen Kreisläufe eine Wirkverbindung zwischen dem ersten Leistungszweig und dem zweiten Leistungszweig abtriebsseitig zum Überlagerungsgetriebe herstellt. Zu beachten ist, dass der Leistungsfluss im zweiten Leistungszweig sowohl vorwärts wie auch rückwärts gerichtet sein kann. Unter der Vorwärtsrichtung wird verstanden, dass der Leistungsfluss in Abtriebsrichtung erfolgt. Für diesen Fall wird mittels des den ersten und zweiten Leistungszweig verbindenden hydrodynamischen Kreislaufs der Leistungseintrag vom zweiten auf den ersten Leistungszweig eingestellt. Wird stattdessen die Leistung auf den zweiten Leistungszweig zurückgeführt, d.h. sie fließt vom ersten Leistungszweig zurück zum Überlagerungsgetriebe, folglich liegt ein Blindleistungsfluss vor, der ebenfalls so geregelt werden kann, dass die genannten Anforderungen an das Getriebe der Energieerzeugungsanlage erfüllt werden.

Zusätzlich zum ersten hydrodynamischen Kreislauf umfasst der zweite Leistungszweig wenigstens einen zweiten hydrodynamischen Kreislauf. Der zusätzliche konstruktive Aufwand für den zweiten hydrodynamischen Kreislauf wird durch eine Vielzahl von Vorteilen ausgeglichen. Zum einen kann der zweite hydrodynamische Kreislauf eine andere Bauform oder eine andere Auslegung im Vergleich zum ersten hydrodynamischen Kreislauf haben.

Als hydrodynamische Kreisläufe kommen hydrodynamische Wandler, hydrodynamische Kupplungen, Retarder und Trilokwandler in Frage. Jeder dieser hydrodynamischen Kreisläufe hat Vorteile für bestimmte Anwendungen bzw. Betriebsbereiche. Wird ein hydrodynamischen Wandler zur Kopplung des ersten und des zweiten Leistungszweigs verwendet, so ergibt sich insbesondere der Vorteil, dass die Charakteristik des hydrodynamischen Wandlers der Charakteristik eines von einer natürlichen Ressource angetriebenen Leistungsaufnehmers, wie einem Windrotor oder einer Wasserturbine, entspricht und aus diesem Grund die geforderte Frequenzkonstanz auf der Abtriebswelle sich aufgrund einer Selbstregelungscharakteristik automatisch einstellt, was nachfolgend noch detailliert dargelegt wird.

Für eine hydrodynamische Kupplung kann zwar keine Selbstregelungscharakteristik realisiert werden, dennoch ergeben sich aufgrund der höheren Effizienz in bestimmten Betriebsbereichen Vorteile für eine hydrodynamische Kupplung im Vergleich zu einem hydrodynamischen Wandler. Insbesondere für den Volllastbereich, bei dem die Eingangsdrehzahl des Getriebes geführt und in den meisten Fällen abgeregelt wird. Der Trilokwandler wiederum kombiniert in gewissen Betriebsbereichen Vorteile bezüglich der Effizienz und der Regelungscharakteristik. Somit haben die unterschiedlichen hydrodynamischen Kreisläufe jeweils Vorteile für bestimmte Betriebsbereiche bzw. Betriebszustände, so dass bei der Verwendung von wenigstens zwei hydrodynamischen Kreisläufen unterschiedliche Bauarten von hydrodynamischen Kreisläufen kombiniert werden können. Je nach Anforderung kann dann zwischen den hydrodynamischen Kreisläufen hin und her geschaltet werden bzw. die jeweilige Gewichtung verändert werden. Dies ist am einfachsten durch die Einstellung des Füllstandes mit Arbeitsmedium in den hydrodynamischen Kreisläufen möglich.

Neben der Verwendung unterschiedlicher Bauformen von hydrodynamischen Kreisläufen können auch mehrere gleiche Typen, beispielsweise zwei hydrodynamische Wandler, parallel im zweiten Leistungszweig aufgebaut werden, die sich durch ihre Auslegungscharakteristik bzw. aufgrund von vor- oder nachgeschalteten zugeordnete Getriebekomponenten unterscheiden. Somit ist es möglich, das erfindungsgemäße Getriebe an unterschiedliche Betriebszustände anzupassen. Stehen unterschiedliche Auslegungen zur Verfügung, ist es auch möglich, mit einem Wechsel in der Auslegung sich dem zeitlich veränderlichen Leistungspotenzial der natürlichen Ressource in verbesserter Art und Weise anzupassen.

Ferner besteht eine vorteilhafte Ausgestaltung der Erfindung darin, den zweiten hydrodynamischen Kreislauf zur Regelung und Steuerung eines ersten hydrodynamischen Kreislaufs einzusetzen. Hierbei übernimmt typischerweise der erste hydrodynamische Kreislauf die Aufgabe, den Leistungsfluss vom ersten Leistungszweig auf den zweiten Leistungszweig bzw. in umgekehrter Richtung zu regeln oder zu steuern. Üblicherweise wird dies durch die Einstellung eines Reaktionsgliedes erreicht. Für einen hydrodynamischen Kreislauf sind dies beispielsweise die Leitschaufeln. Ergibt sich beispielsweise aus einem bestimmten Betriebszustand die Anforderung, dass die Selbstregelungscharakteristik und die damit verbundene optimale Einstellung der Leitschaufeln, verlassen wird, so ist es notwendig, die ursprünglich optimale Leitschaufelstellung abzuändern. Dies führt zu Strömungsverlusten im hydrodynamischen Wandler und einer damit verbundenen reduzierten Effizienz. Weiterhin ist ein hierfür notwendiger mechanischer Verstellmechanismus nicht verschleißfrei, was insofern eine Rolle spielt, da für alle Betriebszustände außerhalb der Selbstregelungscharakteristik mit einer permanenten Veränderung der Leitschaufelstellung auf den fluktuierenden Leistungseintrag aus der natürlichen Ressource reagiert werden muss. Neben der Häufigkeit der Einstellung der Leitschaufelstellung ist für diesen Fall auch die meist hohe Anforderung an die Reaktionsschnelligkeit zu beachten. Mit dem zweiten hydrodynamischen Kreislauf, beispielsweise einem Retarder, wird nun die notwendige Anpassung nicht durch eine Stellbewegung des Reaktionsgliedes, d.h. für den Fall eines hydrodynamischen Wandlers der Leitschaufeln, sondern durch eine Gewichtung zwischen dem ersten und dem zweiten hydrodynamischen Kreislauf im zweiten Leistungszweig erreicht. Wird ein Wechseln der Gewichtung wiederum durch die Einstellung des jeweiligen Füllstandes mit Arbeitsmedium bewirkt, ist ein solcher Wechsel praktisch verschleißfrei und kann beliebig oft wiederholt werden.

Im Folgenden wird die Erfindung anhand von Figuren genauer beschrieben.

Figur 1     zeigt ein drehzahlgeregeltes Getriebe mit einem ersten und einem zweiten Leistungszweig, wobei der zweite Leistungszweig einen hydrodynamischen Wandler und eine hydrodynamische Kupplung umfasst.

Figur 2     zeigt die Leistungs- / Drehzahlcharakteristik für ein Getriebe gemäß Figur 1.

Figur 3     zeigt ein drehzahlgeregeltes Getriebe mit einem ersten und einem zweiten Leistungszweig, wobei der zweite Leistungszweig zwei hydrodynamische Wandler umfasst.

Figur 4     zeigt die Leistungs- / Drehzahlcharakteristik für ein Getriebe gemäß Figur 3.

Figur 5     zeigt ein drehzahlgeregeltes Getriebe mit einem ersten und einem zweiten Leistungszweig, wobei der zweite Leistungszweig einen hydrodynamischen Wandler und einen Retarder umfasst.

Figur 6     zeigt die Leistungs- / Drehzahlcharakteristik für ein Getriebe gemäß Figur 5.

Figur 7     zeigt schematisch den Wirkleistungsverlauf im Bestpunkt einer Windkraftanlage.

Die Rotorleistung $p_R$ einer Windkraftanlage steht näherungsweise im folgenden Zusammenhang zur Windgeschwindigkeit $v_w$:

$$p_R = k \; c_p\left(v_w, \omega_R, \beta\right) v_w^3$$

Hierbei werden als *k* verschiedenen Konstanten wie etwa die Blattgeometrie sowie die Dichte der Luft zusammengefasst. Ferner bezeichnet $c_p$ den Leistungsbeiwert, der wiederum von der Windgeschwindigkeit $v_w$, der Rotordrehzahl $\omega_R$ und der Winkelstellung der Rotorblätter, dem so genannten Pitchwinkel $\beta$, abhängt. Dieser Leistungsbeiwert zeichnet sich durch ein globales Maximum aus, welches sich bei steigenden Windgeschwindigkeiten $v_w$ zu größeren Rotordrehzahlen $\omega_R$ hin verschiebt.

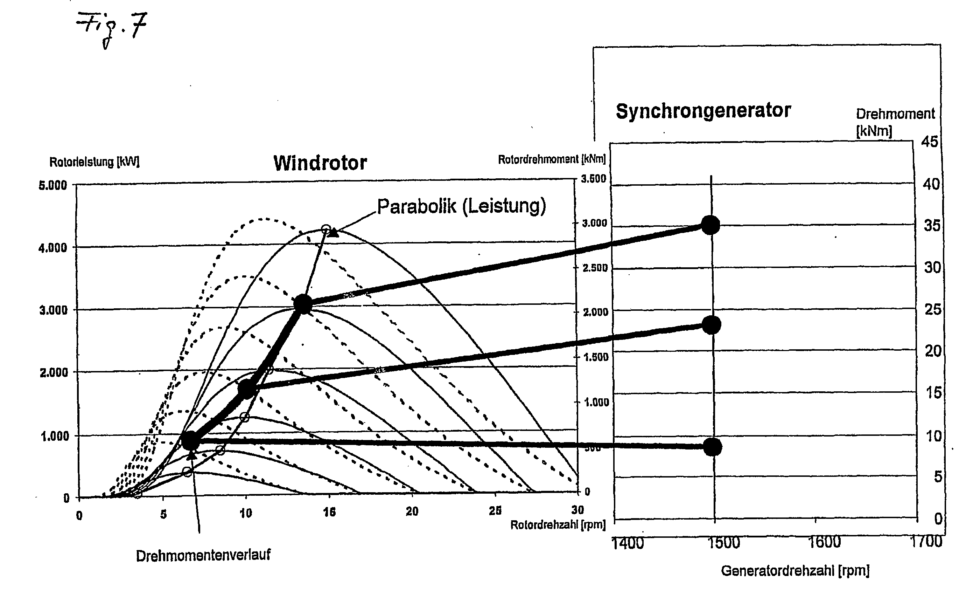

Figur 7 zeigt diesen Zusammenhang durch die Darstellung der Wirkleistung einer Windrotors unter Berücksichtigung verschiedener Windgeschwindigkeiten. Dargestellt ist eine Kurvenschar (durchgezogene Kurven), welche exemplarisch die von einem Windrotor mit 70 m Durchmesser aus der Luftströmung aufgenommene Leistung bei konstanter Rotorblattstellung für die Windgeschwindigkeiten 18 m/s, 16 m/s, 14 m/s, 12 m/s, 10 m/s, 8 m/s für verschiedene Rotordrehzahlen zeigt. Charakteristisch ist die Verschiebung der optimalen Rotordrehzahl zu höheren Werten mit steigender Windgeschwindigkeit. Die jeweiligen Leistungsmaxima liegen auf einer Kurve, die auch als Parabolik bezeichnet wird. Eine Drehzahlführung entlang dieser Kurve der optimalen Leistungsaufnahme wird im Folgenden als leistungsoptimale Drehzahlführung für die Eingangswelle des erfindungsgemäßen Getriebes bezeichnet. Eine drehzahlvariable Anlage kann somit in Abhängigkeit von der zur Verfügung stehenden Windgeschwindigkeit jeweils bei optimalen Leistungsbeiwerten betrieben werden. Neben dem drehzahlvariablen Betrieb bei Teillast werden Windkraftanlagen typischerweise für bestimmte Nennleistungen, verbunden mit einer Nenndrehzahl, ausgelegt, die jeweils bei Volllast erreicht und gehalten wird.

Aus Figur 7 ist ferner anhand der gestrichelt dargestellten Kurvenschar das Drehmoment des Windrotors für die voranstehend genannten Windgeschwindigkeiten wiederum für verschieden Rotordrehzahlen ersichtlich. Die dargestellten Drehmomentverläufe sind den jeweiligen von der Windgeschwindigkeit abhängigen Leistungen zugeordnet, d.h. zu jeder leistungsoptimalen Drehzahl gehört ein Drehmomentwert, der jedoch nicht dem maximalen Drehmoment bei der entsprechenden Windgeschwindigkeit entspricht, sondern einen anderen Wert annimmt - siehe hierzu die fettgedruckte Drehmomentverlaufskurve in Figur 7. Mit diesem vom Windrotor aufgenommen Drehmoment wird über das erfindungsgemäße Getriebe der elektrische Generator angetrieben. Aus dem in Figur 7 dargestellten Drehmoment/Drehzahlverhältnis für einen Synchrongenerator ist ersichtlich, dass für eine eingeprägte Netzfrequenz von 50 Hz auf die Abtriebswelle des Getriebes für die unterschiedlichen übertragenen Drehmomente eine konstante Drehzahl von in diesem Beispiel 1500 U/min abtriebsseitig vorgegeben ist. Wird statt des Synchrongenerators ein Asynchrongenerator verwendet, so stellt sich die Situation im Wesentlichen entsprechend dar, da bei einem Betrieb im linearen Bereich von einem so steilen Drehmoment/Drehzahlverhältnis ausgegangen werden kann, dass die Drehzahl der Abtriebswelle des Getriebes einen im Wesentlichen konstanten Wert aufweist.

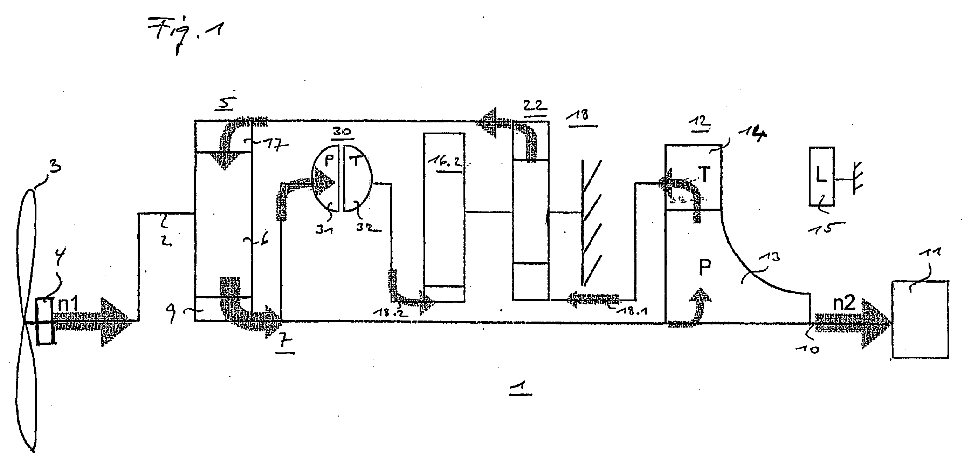

In Figur 1 ist eine erste Ausgestaltung eines erfindungsgemäßen Getriebes 1 gezeigt. Dieser umfasst einen ersten Leistungszweig 7 und einen zweiten Leistungszweig 18, wobei im zweiten Leistungszweig zwei hydrodynamische Kreisläufe, ein hydrodynamischer Wandler 12 und eine hydrodynamische Kupplung, parallel angeordnet sind und beide in wenigstens mittelbarer Wirkverbindung zum ersten Leistungszweig 7 stehen. Im Einzelnen ist ein Getriebe 1 dargestellt, dessen Eingangswelle 2 mit dem Rotor 3 einer Windkraftmaschine wenigstens mittelbar verbunden ist. Im vorliegenden Fall ist ein Vorgetriebe 4 mit einem konstanten Übersetzungsverhältnis zwischen dem Rotor 3 der Windkraftmaschine und der Eingangswelle 2 platziert. Im hier dargestellten Ausführungsbeispiel wird ein Überlagerungsgetriebe 5 zur Leistungsverzweigung im Getriebe 1, beispielsweise ein Planetenradgetriebe, verwendet, wobei die Eingangswelle 2 mit dem Planetenradträger 6 in Verbindung steht und mit diesen mit der Drehzahl n1 antreibt.

Abtriebsseitig zum Überlagerungsgetriebe 5 liegen nun zwei Leistungszweige vor, der erste Leistungszweig 7 führt Leistung über das Sonnenrad 9 zur Ausgangswelle 10 des Getriebes 1. Diese mit konstanter Geschwindigkeit umlaufende Ausgangswelle 10 treibt wenigstens mittelbar den elektrischen Generator 11 an und steht in Wirkverbindung mit dem hydrodynamischen Wandler 12. Hierzu ist die Ausgangswelle 10 wenigstens mittelbar mit dem Pumpenrad 13 des hydrodynamischen Wandlers 12 verbunden. Als Reaktionsglied 15 wird im hydrodynamischen Wandler 12 ein Leitrad mit Stellschaufeln verwendet, mit dem der Leistungsfluss auf das Turbinenrad 14 eingestellt werden kann. Im vorliegenden Ausführungsbeispiel ist beim Betrieb des Getriebes 1 das Reaktionsglied auf einer optimierten Stellung arretiert.

Das Turbinenrad 14 des Wandlers 12 steht in wenigstens mittelbarer Verbindung zu einer weiteren Getriebekomponente, etwa einem zweiten Überlagerungsgetriebe 22, im zweiten Leistungszweig 18, das der Kombination der Teilleistungsflüsse für die beiden hydrodynamischen Kreisläufe dient, wobei jedem der hydrodynamischen Kreisläufe ein Teilleistungsfluss zugeordnet ist. Ein ersten Teilleistungsfluss 18.1 erfolgt über den hydrodynamischen Wandler 12 und ein zweiten Teilleistungsfluss 18.2 über die hydrodynamische Kupplung 30. Zu diesem Zweck steht das Pumpenrad 31 der hydrodynamischen Kupplung 30 in wenigstens mittelbarer Wirkverbindung zum ersten Leistungszweig 7 und überträgt in Abhängigkeit des Füllstandes mit Arbeitsmedium in der hydrodynamischen Kupplung 30 ein Drehmoment bzw. einen Leistungsfluss über das Turbinenrad 32 und eine zwischengeschaltete Getriebekomponente, beispielsweise ein Standgetriebe 16.2, auf die weitere Getriebekomponente 16.2 und auf das zweite Überlagerungsgetriebe 22.

Das Relativverhältnis zwischen dem ersten Teilleistungsfluss 18.1 und dem zweiten Teilleistungsfluss 18.2 kann durch die Füllstände mit Arbeitsmedium im hydrodynamischen Wandler 12 und der hydrodynamischen Kupplung 30 eingestellt werden. Bevorzugt wird, beim Vorliegen einer Teillastbedingung auf dem Energie aufnehmenden Windrotor 3 lediglich den hydrodynamischen Wandler zu aktivieren, wobei dieser eine entsprechend optimierte, jedoch feststehende Stellung des Reaktionsglieds 15 aufweist. Beim Übergang zur Volllast findet ein Wechsel zur hydrodynamischen Kupplung statt, wodurch es möglich ist, die Windkraftanlage bezüglich ihrer Rotordrehzahl abzuregeln.

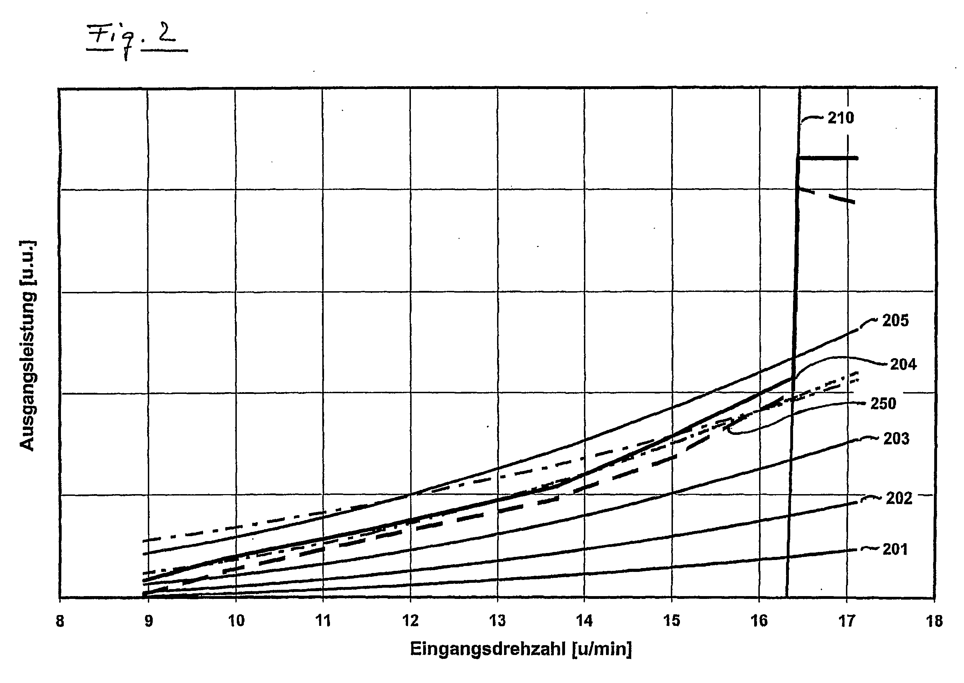

In Figur 2 sind für ein Getriebe gemäß Figur 1 die unterschiedlichen Betriebsbereiche gezeigt, bei denen entweder der hydrodynamische Wandler 12 oder die hydrodynamische Kupplung 30 aktiviert sind. Dargestellt ist die mechanische Ausgangsleistung des Getriebes 1 in Abhängigkeit der Eingangsdrehzahl. Zur Vereinfachung wurde auf ein Vorgetriebe verzichtet, so dass im Falle einer Windkraftanlage die Eingangsdrehzahl der Rotordrehzahl entspricht. Die Ausgangsleistung ist in beliebigen Einheiten angegeben, da die jeweiligen Absolutwerte von der individuellen Baugröße und Geometrie des Leistungsaufnehmers der Energieerzeugungsanlage abhängen. Für Eingangszahlen unter 16,3 U/min wird im vorliegenden Ausführungsbeispiel das Getriebe im Wandlerbereich betrieben. Hierzu ist eine Kurvenschar 201, 202, 203, 204 und 205 dargestellt, wobei jede Kurve einer unterschiedlichen Einstellungen des Reaktionsglieds 15 des hydrodynamischen Wandlers 12 entspricht.

Im Rahmen des fachmännischen Könnens wird das Übersetzungsverhältnis im Überlagerungsgetriebe 5 sowie eventuell die dem Wandler im zweiten Leistungszweig vor- oder nachgeschalteten weiteren Getriebekomponenten ausgelegt. Ebenso wird die Dimensionierung des Wandlers angepasst, so dass für eine optimale Stellung des Reaktionsglieds die Leistungsaufnahmecharakteristik des Rotors 3 der Windkraftanlage im Wesentlichen durch den Wandler nachgebildet wird und somit im Sinne einer Selbstregelungscharakteristik eine konstante Drehzahl auf der Ausgangswelle 10 erzielt werden kann. Damit kann der Windrotor mit einer leistungsoptimalen Drehzahl entlang der Parabolik betrieben werden. Diese optimale Stellung des Reaktionsglieds 15 entspricht im Wesentlichen jener mit dem Bezugszeichen 204. Entsprechend wird die elektrische Leistung des Generators im Wandlerbereich dieser Kennlinie folgen, was in Figur 2 mit der gestrichelten Kurve 250 für die Rotordrehzahlen < 16,3 U/min skizziert ist. Ferner übersetzt das erfindungsgemäße Getriebe 1 die typischerweise geringe Eingangsdrehzahl in eine hohe Ausgangsdrehzahl, die den Generator antreibt. Die abtriebsseitig zum Überlagerungsgetriebe 5 zur Leistungsverzweigung im zweiten Leistungszweig angeordneten hydrodynamischen Kreisläufe können mit hoher Umlaufdrehzahl und damit effizient betrieben werden.

Für höhere Leistungseinträge liegt im vorliegenden Anwendungsbeispiel die Notwendigkeit einer Drehzahlbegrenzung des Windkraftrotors vor. Gründe hierfür können etwa die Geräuschentwicklung oder Aspekte der Bauteilfestigkeit sein. Zu diesem Zweck wird bevorzugt oberhalb einer bestimmten Drehzahlschwelle auf die hydrodynamische Kupplung 30 umgeschaltet und die Ausgangsleistung folgt der Kennlinie 210, die der hydrodynamischen Kupplung zugeordnet ist. Die genaue Lage und die Steilheit der Kennlinie kann wiederum durch die Dimensionierung der hydrodynamischen Kupplung 30 sowie der ihr zugeordneten vor- oder nachgeschalteten Getriebekomponenten im Rahmen des fachmännischen Ermessens gestaltet werden. In einer Weiterentwicklung kann der Übergang zwischen dem Wandlerbereich und dem Kupplungsbereich durch ein teilweises Befüllen bzw. Entleeren der jeweiligen hydrodynamischen Kreisläufe graduiert geschaltet werden.

Im Kupplungsbereich liegt bevorzugt eine solchermaßen steile Kennlinie der hydrodynamischen Kupplung 210 vor, dass in einem weiten Bereich eine Begrenzung der Rotordrehzahl erzielt wird.

Für das voranstehend beschriebene erfindungsgemäße Getriebe 1 wird auch dann bevorzugt vom Wandlerbereich in den Kupplungsbereich umgeschaltet, wenn die hydrodynamische Kupplung 30 gegenüber dem hydrodynamischen Wandler 12 einen höheren Wirkungsgrad aufweist. Auf diese Weise können die Leistungsverluste im Getriebe minimiert werden.

Da die hydrodynamische Kupplung 30 ohnehin regelbar ausgebildet werden muss, ist es bevorzugt, für weitere spezielle Betriebssituationen, wie etwa das Anfahren oder das Bremsen der Energieerzeugungsanlage mit der hydrodynamischen Kupplung 30 zu durchfahren. Solch ein bevorzugter Einsatz der hydrodynamischen Kupplung liegt auch im Falle eines Lastabwurfs vor. Das Umschalten zwischen den unterschiedlichen hydrodynamischen Kreisläufen kann wiederum durch die Einstellung des Füllstandes mit Arbeitsmedium im hydrodynamischen Wandler 12 bzw. der hydrodynamischen Kupplung 30 erreicht werden.

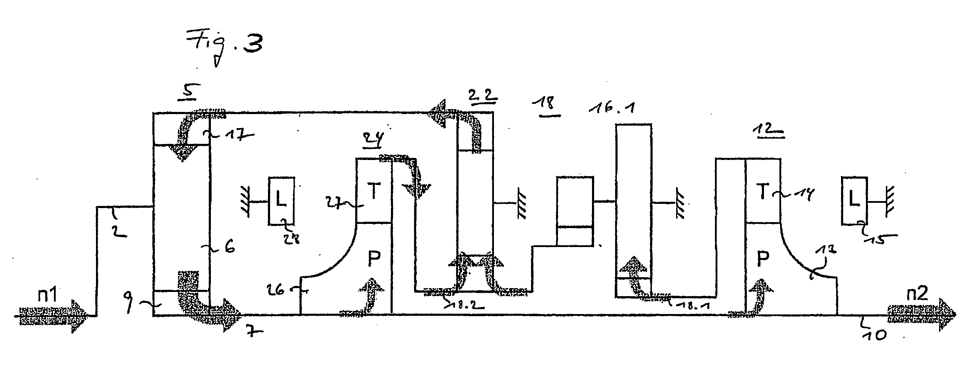

Eine weitere bevorzugte Ausgestaltungsvariante des zweiten Leistungszweigs 18 des Getriebes ist in Figur 3 skizziert. Hierbei wird die Verbindung zwischen dem ersten Leistungszweig 7 und dem zweiten Leistungszweig 18 über zwei typgleiche hydrodynamische Kreisläufe, einem ersten hydrodynamischen Wandler 12 und einem zweiten hydrodynamischen Wandler 24 bewirkt. Die parallelen Teilleistungsflüsse 18.1 und 18.2 im zweiten Leistungszweig 18, die vom ersten hydrodynamischen Wandler 12 und vom zweiten hydrodynamischen Wandler 24 ausgehen, werden durch eine in den zweiten Leistungszweig 18 integrierte weitere Getriebekomponente, beispielsweise ein zweites Überlagerungsgetriebe 22, zusammengefasst und über das Hohlrad 17 auf das Überlagerungsgetriebe 5 zurückgeführt. Sowohl der erste wie auch der zweite hydrodynamische Wandler greifen jeweils mit ihren Pumpenrädern 13, 26 wenigstens mittelbar auf den ersten Leistungszweig 7 zu und stehen jeweils mit den Turbinenrädern 14 und 27 in wenigstens mittelbarer Wirkverbindung mit dem zweiten Leistungszweig 18. Im vorliegenden Fall sind die Leiträder 15 und 28 als fest eingestellt skizziert.

Durch die Verwendung von zwei hydrodynamischen Wandlern 12, 24 im parallelen Abgriff auf den ersten Leistungszweig 7 ist es wiederum möglich, zwischen zwei unterschiedlichen Auslegungen des Getriebes 1 umzuschalten. Die Auslegungsunterschiede können wiederum durch die konstruktive Anpassung des ersten bzw. des zweiten hydrodynamischen Wandlers 12 und 24 sowie durch die Zwischenschaltung von zusätzlichen Getrieben in den Teilzweigen bewirkt werden. In Figur 2 ist dies anhand des Standgetriebes 16.1 skizziert, das in den vom ersten hydrodynamischen Wandler 12 ausgehenden Teilzweig für den ersten Teilleistungsfluss 18.1 integriert ist.

Durch die Verwendung von zwei hydrodynamischen Wandlern ist es möglich, die Selbstregelungscharakteristik des Getriebes über einen weiten Bereich des Leistungseintrags auszudehnen. Außerdem ist es denkbar, den zweiten hydrodynamischen Wandler und mögliche nachfolgende Getriebekomponenten im zweiten Leistungszweig so auszulegen, dass der zweite Teilzweig für den zweiten Teilleistungsfluss 18.2 für den Übergang zum Volllastbereich eingesetzt wird, indem zusätzlich zur im Wesentlichen konstant gehaltenen Drehzahl der Ausgangswelle auch die Rotordrehzahl entlang einer bestimmten Sollkurve zu führen ist.

Das Verhältnis der Teilleistungsflüsse durch den ersten hydrodynamischen Wandler 12 und den zweiten hydrodynamischen Wandler 24 kann verschleißfrei durch die jeweilige Einstellung des Füllstandes mit Arbeitsmedium erreicht werden. Es ist denkbar, jeden der hydrodynamischen Wandler für sich zu betreiben, aber auch ein paralleler Betrieb und die individuelle Einstellung des Drehzahl-/Drehmomentenverhältnisses für jeden der hydrodynamischen Wandler sind möglich. Ferner wird gemäß einer bevorzugten Ausgestaltung der Erfindung, jeweils zwischen beiden hydrodynamischen Wandler 12, 24 umgeschaltet, d. h. diese werden bis auf einen, auf ein enges Drehzahlintervall begrenzten Umschaltbereich nicht gleichzeitig betrieben. Damit wird der gesamte Leistungsfluss auf dem zweiten Leistungszweig 18 außerhalb des Umschaltbereichs entweder dem ersten Teilleistungsfluss 18.1 oder dem zweiten Teilleistungsfluss 18.2 zugeordnet.

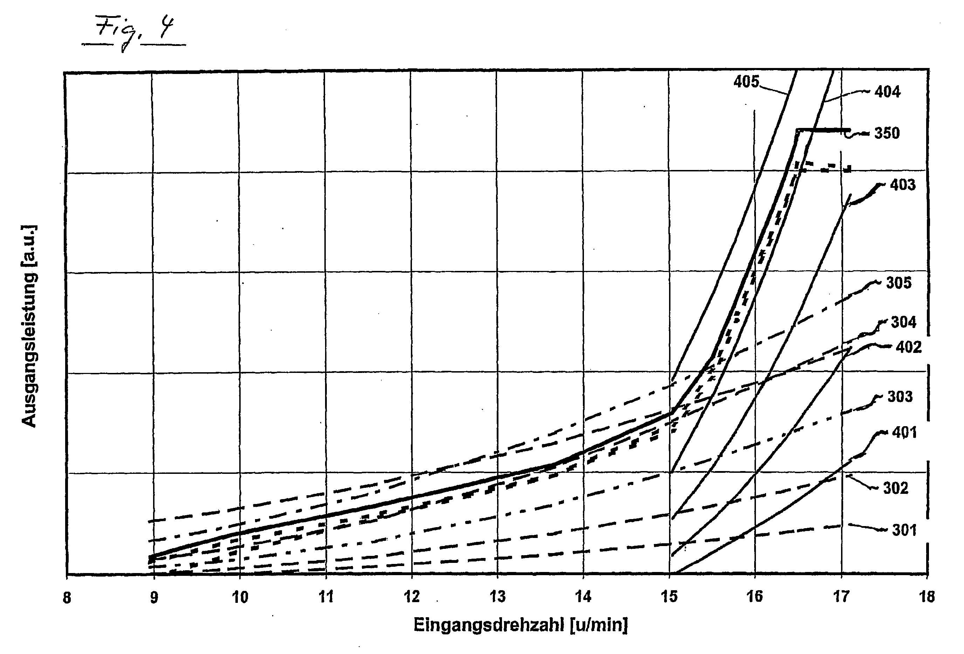

In Figur 4 sind die Kennlinienfelder für die beiden unterschiedlich ausgelegten hydrodynamischen Wandler 12 und 24 für ein erfindungsgemäßes Getriebe gemäß Figur 3 dargestellt. Entsprechend zu Figur 2 ist die Ausgangsleistung des Getriebes 1 in beliebigen Einheiten gegen die Eingangsdrehzahl aufgetragen. Für den ersten hydrodynamischen Wandler 12 ist ein gestricheltes Kennlinienfeld für unterschiedliche Einstellungen des Reaktionsglieds 301, 302, 303, 304 und 305 dargestellt. Die Selbstregelungscharakteristik ist wiederum mit einer im Wesentlichen gleich bleibenden optimalen Einstellung des Reaktionsglieds verbunden, im hier dargestellten Fall entspricht dies im Wesentlichen der Einstellung mit dem Bezugszeichen 304. Der zweite hydrodynamische Wandler ist für höhere Eingangsdrehzahlen ausgelegt und weist ein steileres Kennfeld auf. Im Rahmen des fachmännischen Könnens ist dies durch eine entsprechende Dimensionierung des zweiten hydrodynamischen Wandlers 24 sowie durch die Anordnung vor- oder nachgeschaltete Getriebekomponenten möglich. In Figur 3 ist dem ersten hydrodynamischen Wandler beispielsweise turbinenseitig ein Standgetriebe 16.1 zugeordnet, während auf ein solches für den zweiten hydrodynamischen Wandler 24 verzichtet wurde.

In Figur 4 ist das dem zweiten hydrodynamischen Wandler 24 zugeordnete Kennlinienfeld durch die durchgezogen dargestellte Kurvenschar 401, 402, 403, 404 und 405 skizziert, wobei jede dieser Kurven einer unterschiedlichen Stellung des Reaktionsglieds 28 des zweiten hydrodynamischen Wandler 24 entspricht. Entsprechend skizziert die Kurvenschar 301, 301, 303, 304 und 305 die Eingangsdrehzahl / Ausgangsleistungs-Charakteristik des Getriebes bei Befüllung des ersten hydrodynamischen Wandlers 12, jeweils für verschiedene Stellungen des Reaktionsglieds 15.

Durch eine entsprechende Einstellung des jeweiligen Füllstandes mit Arbeitsmedium für die beiden hydrodynamischen Wandler 12, 24 kann nun zwischen den beiden Kennlinienfeldern umgeschaltet werden, dies erfolgt in Figur 4 oberhalb einer Rotordrehzahl von 15 U/min, so dass das resultierende Verhältnis von Eingangsdrehzahl und Ausgangsleistung für das hier dargestellte Ausführungsbeispiel eines erfindungsgemäßen Getriebes mit dem Bezugszeichen 350 bezeichnet ist, wobei jeweils für beide Wandler eine optimale Stellung des Reaktionsglieds gewählt ist.

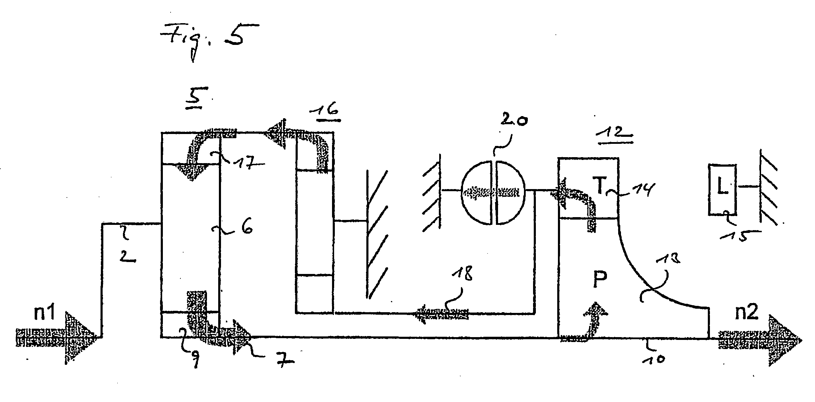

Figur 5 zeigt eine weitere Ausgestaltung eines erfindungsgemäßen drehzahlgeregelten Getriebes mit einer Leistungsverzweigung zwischen einem ersten Leistungszweig 7 und einem zweiten Leistungszweig 18 mittels eines Überlagerungsgetriebes 5, wobei der zweite Leistungszweig 18 zwei parallel angeordnete hydrodynamische Kreisläufe umfasst. Im vorliegenden Fall sind dies ein hydrodynamischen Wandler 12 und ein Retarder 20. Die weiteren Komponenten entsprechen den Antriebssträngen gemäß Figuren 1 und 3 und sind mit übereinstimmenden Bezugszeichen bezeichnet.

In Abwandlung zu den voranstehend beschriebenen Ausführungsbeispielen weist die Ausgestaltung gemäß Figur 5 nur eine abtriebsseitige Verbindung des ersten Leistungszweigs 7 und des zweiten Leistungszweigs 18 über einen hydrodynamischen Wandler 12 auf. Der zweite hydrodynamische Kreislauf im zweiten Leistungszweig 18, der Retarder 20, wirkt zwar ebenfalls wenigstens mittelbar auf das Überlagerungsgetriebe 5 zurück, er verknüpft jedoch nicht den ersten Leistungszweig 7 mit dem zweiten Leistungszweig 18.

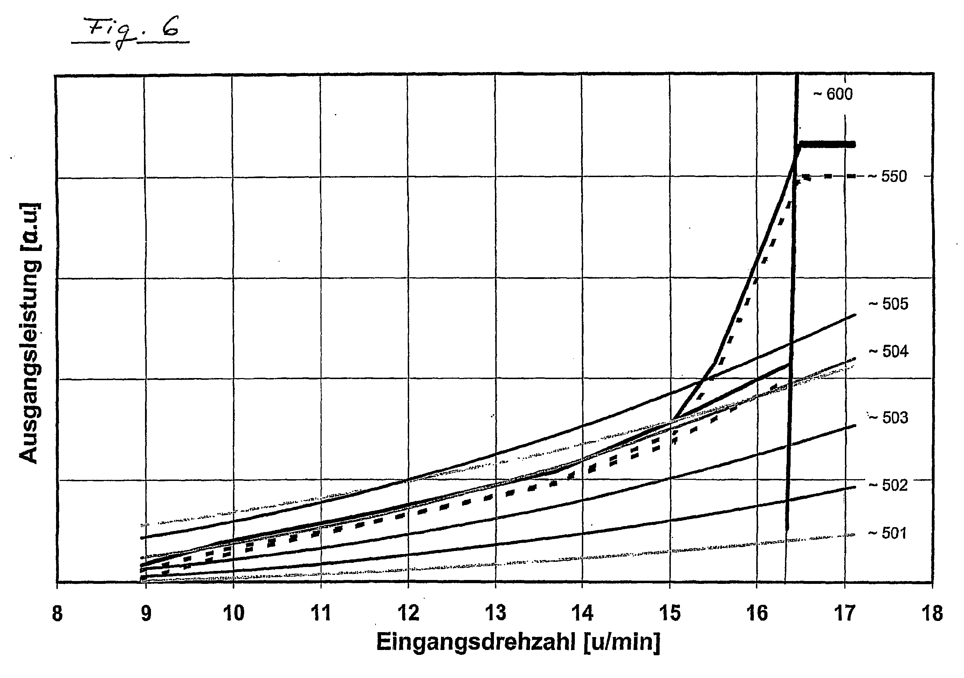

Aus Figur 6 ist wiederum ersichtlich, dass der Retarder dazu dient, den Bereich der leistungsoptimalen Führung bei dem Übergang zur Volllast zu verlassen, ohne dass hierfür eine Verstellung am ersten hydrodynamischen Kreislauf, dem hydrodynamischen Wandler 12, nötig wäre. Dieser wird mit einer konstanten Einstellung des Reaktionsglieds 15, d.h. mit einer konstanten Leitschaufelstellung, betrieben. Im Einzelnen ist in Figur 6 wiederum die Eingangsdrehzahl gegen die Ausgangsleistung in beliebigen Einheiten aufgetragen. Unterhalb einer Drehzahlschwelle, die im vorliegenden Beispiel bei etwas über 16 U/min liegt, wird ausschließlich der hydrodynamische Wandler 12 befüllt und mit einer festgelegten Leitradstellung betrieben, bei der der Windrotor leistungsoptimal umläuft. Im vorliegenden Beispiel entspricht dies im Wesentlichen der mit dem Bezugszeichen 504 bezeichneten Einstellung des Reaktionsglieds. Die weiteren Kurven 501, 502, 503 und 505 der Kennlinienschar ist weiteren, jedoch für den vorliegenden Fall nicht optimalen Stellungen des Reaktionsglieds zugeordnet. Oberhalb der genannten Drehzahlschwelle wird dann der Retarder 20 befüllt, dem eine Retarderkennlinie 600 zugeordnet ist. Diese ist wesentlich steiler als die gewählte Wandlerkennlinie, so dass im Wesentlichen eine Abregelung der Rotordrehzahl folgt. In Figur 6 ist mit der gestrichelten Kurve 550 die so resultierende elektrische Leistungsabgabe des Generators in Abhängigkeit der Rotordrehzahl dargestellt.

Der Vorteil eines erfindungsgemäßen Getriebes gemäß Figur 5 gegenüber einer Variante, bei der auf den zweiten hydrodynamischen Kreislauf, hier den Retarder 20, verzichtet wird, besteht darin, dass für den Fall, dass der Betriebszustand der leistungsoptimalen Führung der Windkraftanlage verlassen werden muss, etwa weil unter Volllastbedingung eine Abregelung der Rotordrehzahl notwendig wird, nicht zwingend eine Veränderung der Leitradstellung resultiert. Ohne den zweiten hydrodynamischen Kreislauf wäre es im allgemeinen Fall dann nicht mehr möglich, über einen weiten Leistungsbereich der natürlichen Ressource mit einer im Wesentlichen konstanten Leitradstellung zu arbeiten, stattdessen müsste der Leistungsfluss über den hydrodynamischen Wandler 12 durch eine zeitlich variable Einstellung des Leitrades aktiv geregelt werden. Neben den hohen Anforderungen bezüglich des mechanischen Verschleißes sowie der Reaktivität ist in einem solchen Fall nachteilig, dass der hydrodynamische Wandler 12 nicht mehr mit höchstmöglicher Effizienz betrieben werden kann. Erfindungsgemäß wird daher gemäß Figur 3 ein zusätzlicher hydrodynamischer Kreislauf, hier ein Retarder 20, parallel zum hydrodynamischen Wandler 12 in den zweiten Leistungszweig 18 integriert. Anstatt nun für besondere Betriebszustände außerhalb des leistungsoptimalen Betriebszustands der Selbstregelung eine Verstellung des Leitrades 15 des hydrodynamischen Wandlers 12 zu vermeiden, wird nun der Füllstand im Retarder 20 so angepasst, dass der Leistungsfluss auf dem zweiten Leistungszweig 18 regelbar wird, ohne die Einstellung des hydrodynamischen Wandlers 12 zu verändern. Ferner kann entsprechend den voranstehend dargestellten Ausführungen auch völlig vom hydrodynamischen Wandler 12 auf den Retarder 20 umgeschaltet werden. Bei einem solchen Übergang vom Wandler- in den Retarderbereich wird dann aber auch die Verbindung zwischen dem ersten Leistungszweig 7 und dem zweiten Leistungszweig 18 des erfindungsgemäßen Getriebes 1 unterbrochen.

Im Rahmen des fachmännischen Könnens ist es wiederum möglich, weitere Ausgestaltungen eines leistungsverzweigten Getriebes mit wenigstens zwei hydrodynamischen Kreisläufen in einem der Antriebsstränge zur Steuerung bzw. Regelung des Leistungsflusses zu realisieren. Insbesondere ist es auch möglich, mehr als zwei hydrodynamische Kreisläufe einzusetzen und weitere unterschiedliche Bauformen bzw. unterschiedliche Auslegungsarten von hydrodynamischen Kreisläufen zu realisieren.

Neben dem erfindungsgemäßen Getriebe ist ein Verfahren offenbart zur Steuerung der wenigstens zwei hydrodynamischen Kreisläufe im zweiten Leistungszweig. Insbesondere wird mit diesem Verfahren der Füllstand der einzelnen hydrodynamischen Kreisläufe in Abhängigkeit des Betriebszustands und des Energieeintrags durch den Wind- oder den Wasserrotor gesteuert bzw. geregelt. Bevorzugt wird die Gewichtung oberhalb einer bestimmten Eingangsdrehzahlschwelle verändert. Es ist auch möglich, mehrere gestaffelte Schwellwerte zu verwenden und die Veränderung der Gewichtung der einzelnen hydrodynamischen Kreisläufe graduiert vorzunehmen. Alternativ kann auch ein vollständiges Umschalten von einem ersten hydrodynamischen Kreislauf auf wenigstens einen zweiten hydrodynamischen Kreislauf aufgrund des Überschreitens einer bestimmten Drehzahlschwelle des Rotors oder aufgrund des Eintritts eines bestimmten Betriebszustandes bewirkt werden. Hiermit ist dann ein vollständiges Entleeren bzw. ein vollständiges Füllen des gehenden bzw. des kommenden hydrodynamischen Kreislaufs verbunden.

**Patentansprüche**

1. Energieerzeugungsanlage mit einem drehzahlgeregelten Getriebe mit;

   1.1 einer Eingangswelle (2), die wenigstens mittelbar mit einem Leistungsaufnehmer einer Wind- oder Wasserkraftmaschine verbunden ist;
   1.2 einer Ausgangswelle (10), die wenigstens mittelbar mit einem elektrischen Generator (11) verbunden, wobei die Drehzahl der Ausgangswelle (2) im Wesentlichen konstant ist;
   1.3 einem Überlagerungsgetriebe (5), das wenigstens mittelbar mit der Eingangswelle (2) verbunden ist und welches Leistung auf einen ersten Leistungszweig (7), der wenigstens mittelbar mit der Ausgangswelle (10) verbunden ist, und einen zweiten Leistungszweig (18) aufteilt; **dadurch gekennzeichnet, dass**
   1.4 der zweite Leistungszweig (18) wenigstens zwei hydrodynamische Kreisläufe umfasst, wobei wenigstens einer der hydrodynamischen Kreisläufe in wenigstens mittelbarer Verbindung zum ersten Leistungszweig (7) steht.

2. Energieerzeugungsanlage mit einem drehzahlgeregelten Getriebe nach Anspruch 1, **dadurch gekennzeichnet, dass** als hydrodynamische Kreisläufe im zweiten Leistungszweig (18) ein hydrodynamischer Wandler und/oder eine hydrodynamische Kupplung und/oder ein Trilokwandler und/oder ein Retarder verwendet werden.

3. Energieerzeugungsanlage mit einem drehzahlgeregelten Getriebe nach wenigsten einem der Ansprüche 1 - 2, **dadurch gekennzeichnet, dass** die hydrodynamischen Kreisläufe im zweiten Leistungszweig (18) parallel angeordnet sind.

4. Energieerzeugungsanlage mit einem drehzahlgeregelten Getriebe nach wenigsten einem der Ansprüche 1 - 3, **dadurch gekennzeichnet, dass** Mittel vorgesehen sind, den Füllstand des Arbeitsmediums in den einzelnen hydrodynamischen Kreisläufen des zweiten Leistungszweigs (18) zu verändern.

5. Energieerzeugungsanlage mit einem drehzahlgeregelten Getriebe nach wenigsten einem der Ansprüche 1 bis 4, **dadurch gekennzeichnet, dass** ein hydrodynamischer Wandler, der als einer der hydrodynamischen Kreisläufe im zweiten Leistungszweig (18) verwendet wird, mit einer festen Leitradstellung betrieben wird.

6. Energieerzeugungsanlage mit einem drehzahlgeregelten Getriebe nach wenigsten einem der Ansprüche 1 bis 5, **dadurch gekennzeichnet, dass** die Ausgangswelle (10) eine höhere Drehzahl aufweist als die Eingangswelle (2).

7. Energieerzeugungsanlage mit einem drehzahlgeregelten Getriebe nach wenigsten einem der Ansprüche 1 bis 6, **dadurch gekennzeichnet, dass** der zweite Leistungszweig (18) wenigstens ein Standgetriebe (16) umfasst.

8. Energieerzeugungsanlage mit einem drehzahlgeregelten Getriebe nach wenigsten einem der Ansprüche 1 bis 7, **dadurch gekennzeichnet, dass** die Verbindung zwischen dem ersten Leistungszweig (7) und dem zweiten Leistungszweig (18) mittels eines hydrodynamischen Wandlers (12) hergestellt wird, wobei das Pumpenrad (13) des hydrodynamischen Wandlers (12) wenigstens mittelbar mit dem ersten Leistungszweig (7) und das Turbinenrad (14) des hydrodynamischen Wandlers (12) wenigstens mittelbar mit dem zweiten Leistungszweig (18) verbunden sind.

9. Energieerzeugungsanlage mit einem drehzahlgeregelten Getriebe nach wenigsten einem der Ansprüche 1 bis 7, **dadurch gekennzeichnet, dass** die Verbindung zwischen dem ersten Leistungszweig (7) und dem zweiten Leistungszweig (18) mittels einer hydrodynamischen Kupplung (30) hergestellt wird, wobei das Pumpenrad (31) der hydrodynamischen Kupplung (30) wenigstens mittelbar mit dem ersten Leistungszweig (7) und das Turbinenrad (32) der hydrodynamischen Kupplung (30) wenigstens mittelbar mit dem zweiten Leistungszweig (18) verbunden sind.

10. Energieerzeugungsanlage mit einem drehzahlgeregelten Getriebe nach wenigsten einem der Ansprüche 1 - 7, **dadurch gekennzeichnet, dass** die Verbindung zwischen dem ersten Leistungszweig und dem zweiten Leistungszweig mittels eines Trilokwandlers hergestellt wird, wobei das Pumpenrad des Trilokwandlers wenigstens mittelbar mit dem ersten Leistungszweig (7) und das Turbinenrad des Trilokwandlers wenigstens mittelbar mit dem zweiten Leistungszweig (18) verbunden sind.

11. Energieerzeugungsanlage mit einem drehzahlgeregelten Getriebe nach wenigsten einem der Ansprüche 9 - 10, **dadurch gekennzeichnet, dass** ein Retarder (20) wenigstens mittelbar mit dem zweiten Leistungszweig (18) verbunden ist.

12. Energieerzeugungsanlage mit einem drehzahlgeregelten Getriebe nach wenigstens einem der Ansprüche 1 - 11, **dadurch gekennzeichnet, dass** ein erster hydrodynamischer Kreislauf eine erste Verbindung zwischen dem ersten Leistungszweig (7) und dem zweiten Leistungszweig (18) und ein zweiter hydrodynamischer Kreislauf eine zweite Verbindung zwischen dem ersten Leistungszweig (7) und dem zweiten Leistungszweig (18) herstellen, wobei im ersten Leistungszweig (7) die Leistungsflüsse vom ersten hydrodynamischen Kreislauf und vom zweiten hydrodynamischen Kreislauf mittels eines zweiten Überlagerungsgetriebes (22) zusammengeführt werden.

13. Energieerzeugungsanlage mit einem drehzahlgeregelten Getriebe nach Anspruch 12, **dadurch gekennzeichnet, dass** der erste hydrodynamische Kreislauf ein hydrodynamischen Wandler (12) und der zweite hydrodynamische Kreislauf eine hydrodynamische Kupplung (30) sind.

14. Energieerzeugungsanlage mit einem drehzahlgeregelten Getriebe nach Anspruch 13, **dadurch gekennzeichnet, dass** zwischen der hydrodynamischen Kupplung (30) und dem zweiten Überlagerungsgetriebe (22) ein Standgetriebe (16.2) zwischengeschaltet ist.

15. Energieerzeugungsanlage mit einem drehzahlgeregelten Getriebe nach Anspruch 14, **dadurch gekennzeichnet, dass** erster und zweiter hydrodynamischer Kreislauf hydrodynamische Wandler sind.

16. Energieerzeugungsanlage mit einem drehzahlgeregelten Getriebe nach Anspruch 15, **dadurch gekennzeichnet, dass** zwischen wenigstens einem der Turbinenräder der hydrodynamischen Wandler und dem zweiten Überlagerungsgetriebe (22) ein Standgetriebe zwischengeschaltet ist.

17. Verfahren zur Steuerung und/oder Regelung einer Energieerzeugungsanlage nach wenigsten einem der Ansprüche 1-16, **dadurch gekennzeichnet, dass** das Befüllen der hydrodynamischen Kreisläufe im zweiten Leistungszweig (18) des Getriebes (1) in Abhängigkeit der Eingangsdrehzahl des Getriebes vorgenommen wird.

**18.** Verfahren zur Steuerung und/oder Regelung einer Energieerzeugungsanlage nach Anspruch 17, **dadurch gekennzeichnet, dass** im zweiten Leistungszweig (18) des Getriebes unterhalb einer ersten Drehzahlschwelle für die Eingangsdrehzahl ein erster hydrodynamischer Kreislauf mit Arbeitsmedium befüllt und ein zweiter hydrodynamischer Kreislauf entleert ist und oberhalb einer zweiten Drehzahlschwelle für die Eingangsdrehzahl der erste hydrodynamische Kreislauf entleert und der zweite hydrodynamische Kreislauf mit Arbeitsmedium befüllt ist.

**Claims**

**1.** Power generating plant comprising a variable-speed transmission;

> 1.1 with an input shaft (2) which is connected at least indirectly with a power transducer of a wind-energy generator or hydro-electric generator;
> 1.2 with an output shaft (10) which is connected at least indirectly with an electric generator (11), with the speed of the output shaft (2) being substantially constant;
> 1.3 with a superposition gear (5) which is connected at least indirectly with the input shaft (2) and which divides power among a first power branch (7) connected at least indirectly with the output shaft (10) and a second power branch (18); **characterized in that**
> 1.4 with the second power branch (18) comprises at least two hydrodynamic circulations, with at least one of the hydrodynamic circulations being at least indirectly in connection with the first power branch (7).

**2.** Power generating plant comprising a variable-speed transmission according to claim 1, **characterized in that** a hydrodynamic converter and/or a hydrodynamic coupling and/or a TRILOK torque converter and/or a retarder are used as hydrodynamic circulations in the second power branch (18).

**3.** Power generating plant comprising a variable-speed transmission according to at least one of the claims 1 to 2, **characterized in that** the hydrodynamic circulations are arranged in the second power branch (18) in parallel.

**4.** Power generating plant comprising a variable-speed transmission according to at least one of the claims 1 to 3, **characterized in that** means are provided to change the filling level of the working medium in the individual hydrodynamic circulations of the second power branch (18).

**5.** Power generating plant comprising a variable-speed transmission according to at least one of the claims 1 to 4, **characterized in that** a hydrodynamic converter which is used as one of the hydrodynamic circulations in the second power branch (18) is operated with a fixed guide wheel position.

**6.** Power generating plant comprising a variable-speed transmission according to at least one of the claims 1 to 5, **characterized in that** the output shaft (10) has a higher speed than the input shaft (2).

**7.** Power generating plant comprising a variable-speed transmission according to at least one of the claims 1 to 6, **characterized in that** the second power branch (18) comprises at least one stationary transmission (16).

**8.** Power generating plant comprising a variable-speed transmission according to at least one of the claims 1 to 7, **characterized in that** the connection between the first power branch (7) and the second power branch (18) is produced by means of a hydrodynamic converter (12), with the pump wheel (13) of the hydrodynamic converter (12) being connected at least indirectly with the first power branch (7) and the turbine wheel (14) of the hydrodynamic converter (12) at least indirectly with the second power branch (18).

**9.** Power generating plant comprising a variable-speed transmission according to at least one of the claims 1 to 7, **characterized in that** the connection between the first power branch (7) and the second power branch (18) is produced by means of a hydrodynamic coupling (30), with the pump wheel (31) of the hydrodynamic coupling (30) being connected at least indirectly with the first power branch (7) and the turbine wheel (32) of the hydrodynamic coupling (30) at least indirectly with the second power branch (18).

**10.** Power generating plant comprising a variable-speed transmission according to at least one of the claims 1 to 7, **characterized in that** the connection between the first power branch and the second power branch is produced by means of a TRILOK torque converter, with the pump wheel of the TRILOK torque converter being connected at least indirectly with the first power branch (7) and the turbine wheel of the TRILOK torque converter at least indirectly with the second power branch (18).

**11.** Power generating plant comprising a variable-speed transmission according to at least one of the claims 9 to 10, **characterized in that** a retarder (20) is connected at least indirectly with the second power branch (18).

**12.** Power generating plant comprising a variable-speed transmission according to at least one of the claims 1 to 11, **characterized in that** a first hydrodynamic circulation produces a first connection between the first power branch (7) and the second power branch (18) and a second hydrodynamic circulation produces a second connection between the first power branch (7) and the second power branch (18), with the power flows from the first hydrodynamic circulation and from the second hydrodynamic circulation being combined in the first power branch (7) by means of a second superposition gear (22).

13. Power generating plant comprising a variable-speed transmission according to claim 12, **characterized in that** the first hydrodynamic circulation is a hydrodynamic converter (12) and the second hydrodynamic circulation is a hydrodynamic coupling (30).

14. Power generating plant comprising a variable-speed transmission according to claim 13, **characterized in that** a stationary transmission (16.2) is interposed between the hydrodynamic coupling (30) and the second superposition gear (22).

15. Power generating plant comprising a variable-speed transmission according to claim 14, **characterized in that** the first and second hydrodynamic circulation are hydrodynamic converters.

16. Power generating plant comprising a variable-speed transmission according to claim 15, **characterized in that** a stationary transmission is interposed between at least one of the turbine wheels of the hydrodynamic converters and the second superposition gear (22).

17. A method for the open-loop and/or closed-loop control of a power-generating plant according to at least one of the claims 1 to 16, **characterized in that** the filling of the hydrodynamic circulations in the second power branch (18) of the transmission (1) is made depending on the input speed of the transmission.

18. A method for the open-loop and/or closed-loop control of a power-generating plant according to claim 16, **characterized in that** in the second power branch (18) of the transmission a first hydrodynamic circulation is filled with working medium and a second hydrodynamic circulation is emptied below a first speed threshold for the input speed, and the first hydrodynamic circulation is emptied and the second hydrodynamic circulation is filled with working medium above a second speed threshold for the input speed.

## Revendications

1. Centrale de production d'énergie avec transmission à vitesse variable comportant :

    1.1 un arbre d'entrée (2), relié au moins indirectement à un enregistreur de puissance d'une centrale éolienne ou hydraulique ;
    1.2 un arbre de sortie (10), relié au moins indirectement à un générateur électrique (11), où la vitesse de rotation de l'arbre de sortie (2) est sensiblement constante ;
    1.3 une transmission à superposition (5), qui est solidaire au moins indirectement de l'arbre d'entrée (2) et qui répartit la puissance sur une première branche de puissance (7) qui est solidaire au moins indirectement de l'arbre de sortie (10) et sur une deuxième branche de puissance (18), caractérisée en ce
    1.4 la seconde branche de puissance (20) comprend au moins deux circuits hydrodynamiques, où au moins l'un des circuits hydrodynamiques est au moins indirectement solidaire de la première branche de puissance (7).

2. Centrale de production d'énergie avec transmission à vitesse variable selon la revendication 1, **caractérisée en ce que** l'on utilise comme circuits hydrodynamiques dans la seconde branche de puissance (18) un convertisseur hydrodynamique et/ou un accouplement hydrodynamique et/ou un convertisseur trilok et/ou un retardeur.

3. Centrale de production d'énergie avec transmission à vitesse variable selon au moins l'une des revendications 1-2, **caractérisée en ce que** les circuits hydrodynamiques sont disposés parallèles dans la seconde branche de puissance (18).

4. Centrale de production d'énergie avec transmission à vitesse variable selon au moins l'une des revendications 1-3, **caractérisée en ce que** des moyens sont prévus pour modifier le niveau de remplissage du fluide de travail dans les différents circuits hydrodynamiques de la seconde branche de puissance (18).

5. Centrale de production d'énergie avec transmission à vitesse variable selon au moins l'une des revendications 1 à 4, **caractérisée en ce qu'**un convertisseur hydrodynamique, que l'on utilise comme l'un des circuits hydrodynamiques dans la seconde branche de puissance (18), est entraîné avec une position de roue motrice fixe.

6. Centrale de production d'énergie avec transmission à vitesse variable selon au moins l'une des revendications 1 à 5, **caractérisée en ce que** l'arbre de sortie (10) possède une vitesse de rotation supérieure à celle de l'arbre d'entrée (2).

7. Centrale de production d'énergie avec transmission à vitesse variable selon au moins l'une des revendications 1 à 6, **caractérisée en ce que** la seconde branche de puissance (18) comporte au moins une transmission stationnaire (16).

8. Centrale de production d'énergie avec transmission à vitesse variable selon au moins l'une des revendications 1 à 7, **caractérisée en ce que** la liaison entre la première branche de puissance (7) et la seconde branche de puissance (18) est assurée par un convertisseur hydrodynamique (12), où la roue de pompe (13) du convertisseur hydrodynamique (12) est solidaire au moins indirectement de la première branche de puissance (7) et la roue de turbine (14) du convertisseur hydrodynamique (12) est solidaire au moins indirectement de la seconde branche de puissance (18).

9. Centrale de production d'énergie avec transmission à vitesse variable selon au moins l'une des revendications 1 à 7, **caractérisée en ce que** la liaison entre la première branche de puissance (7) et la seconde branche de puissance (18) est assurée par un accouplement hydrodynamique (30), où la roue de pompe (31) de l'accouplement hydrodynamique (30) est solidaire moins au indirectement de la première branche de puissance (7) et la roue de turbine (32) de l'accouplement hydrodynamique (30) est solidaire au moins indirectement de la seconde branche de puissance (18).

10. Centrale de production d'énergie avec transmission à vitesse variable selon au moins l'une des revendications 1-7, **caractérisée en ce que** la liaison entre la première branche de puissance et la seconde branche de puissance est assurée par un convertisseur trilok, où la roue de pompe du convertisseur trilok est solidaire au moins indirectement de la première branche de puissance (7) et la roue de turbine du convertisseur trilok est solidaire au moins indirectement de la seconde branche de puissance (18).

11. Centrale de production d'énergie avec transmission à vitesse variable selon au moins l'une des revendications 9-10, **caractérisée en ce qu'**un retardeur (20) est relié au moins indirectement à la seconde branche de puissance (18).

12. Centrale de production d'énergie avec transmission à vitesse variable selon au moins l'une des revendications 1-11, **caractérisée en ce qu'**un premier circuit hydrodynamique crée une première liaison entre la première branche de puissance (7) et la seconde branche de puissance (18) et un second circuit hydrodynamique crée une seconde liaison entre la première branche de puissance (7) et la seconde branche de puissance (18), où les flux de puissance provenant du premier circuit hydrodynamique et du second circuit hydrodynamique sont réunis par le biais d'une seconde transmission à superposition (22) dans la première branche de puissance (7).

13. Centrale de production d'énergie avec transmission à vitesse variable selon la revendication 12, **caractérisée en ce que** le premier circuit hydrodynamique est un convertisseur hydrodynamique (12) et que le second circuit hydrodynamique est un accouplement hydrodynamique (30).

14. Centrale de production d'énergie avec transmission à vitesse variable selon la revendication 13, **caractérisée en ce qu'**une transmission à superposition (16.2) est interposée entre l'accouplement hydrodynamique (30) et la seconde transmission stationnaire (22).

15. Centrale de production d'énergie avec transmission à vitesse variable selon la revendication 14, **caractérisée en ce que** le premier circuit hydrodynamique et le second circuit hydrodynamique sont des convertisseurs hydrodynamiques.

16. Centrale de production d'énergie avec transmission à vitesse variable selon la revendication 15, **caractérisée en ce qu'**une transmission stationnaire est interposée entre au moins l'une des roues de turbine des convertisseurs hydrodynamiques et la seconde transmission stationnaire (22).

17. Procédé de commande et/ou de régulation d'une centrale de production d'énergie selon au moins l'une des revendications 1-16, **caractérisé en ce que** le remplissage des circuits hydrodynamiques dans la seconde branche de puissance (18) de la transmission (1) s'effectue en fonction de la vitesse de rotation d'entrée de la transmission.

18. Procédé de commande et/ou de régulation d'une centrale de production d'énergie selon la revendication 17, **caractérisé en ce qu'**un premier circuit hydrodynamique est rempli de fluide de travail dans la seconde branche de puissance (18) de la transmission au-dessous d'un premier seuil de vitesse de rotation et qu'un second circuit hydrodynamique est vidé et que le premier circuit hydrodynamique est vidé au-dessus d'un second seuil de vitesse pour la première vitesse de rotation d'entrée.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8101444 A